# EUROPÄISCHE PATENTANMELDUNG

(11) **EP 2 457 706 A2**
(43) Veröffentlichungstag der Anmeldung: **30.05.2012**
(21) Anmeldenummer: 11190295.3
(22) Anmeldetag: 23.11.2011
(51) Int. Cl.: B29C 33/20, B29C 63/02, B32B 38/18, B60R 13/02, B30B 15/30

(54) **Vorrichtung und Verfahren zum Herstellen flächiger kaschierter Bauteile**

(30) Priorität: 25.11.2010 DE 102010061944
(71) Anmelder: FRIMO Group GmbH, 49504 Lotte (DE)
(72) Erfinder: Spengler, Andreas, 61130 Nidderau (DE); Kasprowicz, Stanislaw, 36251 Bad Hersfeld (DE)
(74) Vertreter: HOFFMANN EITLE

(57) **Zusammenfassung**

Die vorliegende Erfindung schafft ein Verfahren zum Herstellen flächiger kaschierter Bauteile, insbesondere Innenverkleidungsteile für Kraftfahrzeuge, die folgenden Verfahrenschritte auf: Anordnen und Positionieren eines Dekormaterialfertigzuschnitts in einem Werkzeug (2) mit einer Unterform (4) und einer Oberform (8) , von denen mindestens eine in Bezug auf die andere verfahrbar ist, Aufheizen und bevorzugt auch Kalibrieren eines flächigen Trägermaterials (10) außerhalb des Werkzeugs (2), Anordnen und Positionieren des aufgeheizten Trägermaterials (10) in dem Werkzeug (2) auf dem Dekormaterial-Zuschnitt, und Verformen des Trägermaterials und Verbinden von Trägermaterial (10) und Dekormaterialzuschnitt (20) durch ein Zusammenpressen durch ein auf einander zu Bewegen von Unterform (4) und Oberform (8).

## Beschreibung

### Technisches Gebiet

Die vorliegende Erfindung bezieht sich auf eine Vorrichtung und ein Verfahren zum Herstellen flächiger kaschierter Bauteile.

### Stand der Technik

Im Bereich der Innenverkleidungsteile insbesondere in der Kraftfahrzeugindustrie ist es bekannt Trägermaterialien durch Kaschieren mit schützenden oder dekorativen Schichten zu versehen. Kaschiert wird ferner, um eine Addierung günstiger Materialeigenschaften zu erzielen. Unter Kaschieren versteht man dabei das Verbinden mehrerer Lagen gleicher oder verschiedener Materialien (meist Folien) mit Hilfe geeigneter Kaschiermittel (z.B. Lack, Leim, Wachs). Es wird unterschieden zwischen dem Nasskaschieren, bei dem nasser Klebstoff eingesetzt wird, dem Trockenkaschieren, bei dem mittels trockenem Klebstoff verbunden wird und dem Thermokaschieren, bei dem teilweise ohne Klebstoff unter Wärme und Druck gefügt wird.

Bei bekannten Kaschiertechniken finden Träger aus thermoplastischen Kunststoffen sowie aus duroplastischen und thermoplastischen Faserverbundteilen Anwendung. Als Kaschiermaterialien werden hauptsächlich TPO, ASA, ABS, PVC, Textilien und Leder sowie Schaumverbunde zur Verbesserung der Haptik eingesetzt. Dabei werden verbreitet Klebstoffe für die Verbindung zwischen dem Träger und der Kaschierung verwendet. Diese Klebstoffe werden auf den Träger und/oder die Kaschierung appliziert, ggf. getrocknet und während des Kaschiervorgangs aktiviert.

Die Verwendung von Klebstoffen hat Nachteile für die Recyclingfähigkeit der kaschierten Bauteile, da jede einzelne zusätzlich verwendete Komponente das Recyceln erschwert. Auch sind in den Klebstoffen verbreitet Lösungsmittel enthalten, die im Hinblick auf ein Recycling bzw. eine Entsorgung umwelttechnisch problematisch sind.

Aus der DE 196 46 007 C1 ist ein Verfahren zum Kaschieren eines einen thermoplastischen Werkstoff enthaltenden Trägers mit einer Deckschicht beschrieben. Der Träger wird dabei einer Wärmebehandlung unterzogen, so dass er eine Vorwärmtemperatur hat, die zwischen der Langzeit-Gebrauchstemperatur ohne mechanische Belastung und der Plastifizierungstemperatur des thermoplastischen Werkstoffs liegt.

### Darstellung der Erfindung

Es ist daher Aufgabe der vorliegenden Erfindung eine Vorrichtung und ein Verfahren zum Herstellen flächiger kaschierter Bauteile, insbesondere Innenverkleidungsteile für Kraftfahrzeuge, zur Verfügung zu stellen, dass ein klebstofffreies Kaschieren von Dekormaterial auf Trägermaterialien mit wenigen Arbeitsschritten ermöglicht.

Erfindungsgemäß wird diese Aufgabe durch eine Vorrichtung und ein Verfahren zum Herstellen flächiger kaschierter Bauteile, insbesondere Innenverkleidungsteile für Kraftfahrzeuge, mit den Merkmalen der unabhängigen Patentansprüche gelöst. In den Unteransprüchen finden sich vorteilhafte Ausgestaltungen und Verbesserungen der Erfindung.

Demgemäß weist ein Verfahren zum Herstellen flächiger kaschierter Bauteile, insbesondere Innenverkleidungsteile für Kraftfahrzeuge, die folgenden Verfahrenschritte auf: Anordnen und Positionieren eines Dekormaterialzuschnitts in einem Werkzeug mit einer Unterform und einer Oberform, von denen mindestens eine in Bezug auf die andere verfahrbar ist, Aufheizen und bevorzugt auch Kalibrieren eines flächigen Trägermaterials außerhalb des Werkzeugs, Anordnen und Positionieren des aufgeheizten Trägermaterials in dem Werkzeug auf dem Dekormaterial-Zuschnitt, und Verformen des Trägermaterials und Verbinden von Trägermaterial und Dekormaterialzuschnitt durch ein Zusammenpressen durch ein auf einander zu Bewegen von Unterform und Oberform. Es wird somit ein in der Kontur zugeschnittenes Dekormaterial bevorzugt in die Unterform eingelegt. Anschließend wird eine aufgeheizte und kalibrierte Trägermaterialmatte auf dem Dekorfertigzuschnitt abgelegt, in einem Schritt verformt und bevorzugt klebstofflos mit dem Dekormaterial verbunden. Dadurch, dass das Verfahren klebstofffrei durchgeführt wird, kann Klebstoff eingespart werden. Ferner wird dadurch, dass der Dekor als Fertigzuschnitt vorliegt, der Verfahrensschritt von einem nachträglichen Beschneiden des Dekors eingespart.

Bevorzugt kommt als Trägermaterial ein Naturfaser/Kunststoff Gemisch, insbesondere einem Naturfaser/Polypropylen Gemisch zum Einsatz. Dieses ist kostengünstig herstellbar und bietet als Verbundmaterial gute Festigkeitseigenschaften. Ferner weist es gute Verbindungseigenschaften für ein thermisches klebstoffloses Fügen auf.

Gemäß einer besonderen Ausführungsform der vorliegenden Erfindung erfolgt das Positionieren des Dekormaterialzuschnitts im Werkzeug mittels versenkbarer Positionierhilfen. Die Positionierhilfen erlauben eine positionsgenaue Ausrichtung des Dekormaterialzuschnitts im Werkzeug, indem der Dekormaterialzuschnitt an den Positionierhilfen zum Anliegen gebracht wird. Um ein Schließen des Werkzeugs weiterhin zu ermöglichen, sind die Positionierhilfen daher versenkbar angeordnet und werden beim Schließen des Werkzeugs in die jeweilige Formhälfte und damit aus dem Kollisionsbereich mit der gegenüberliegenden Formhälfte bewegt. Das Verfahren der Positionierhilfen in die jeweilige Formhälfte kann beispielsweise beim Schließen des Werkzeugs durch den Andruck der gegenüberliegenden Formhälfte erfolgen.

Eine Vorrichtung zum Herstellen flächiger kaschierter Bauteile, insbesondere Innenverkleidungsteile für Kraftfahrzeuge, weist ein Werkzeug mit einer temperierten Unterform und einer temperierten Oberform auf, von denen mindestens eine in Bezug auf die andere verfahrbar ist, und ferner eine außerhalb des Werkzeugs angeordnete Heizeinrichtung zum Aufheizen und bevorzugt auch Kalibrieren des flächigen Trägermaterials. Ferner kann eine Positioniereinrichtung zum Positionieren des in das Werkzeug einzulegenden Dekormaterialzuschnitts für eine automatisierte Dekormaterialzuführung vorgesehen werden. Die Heizeinrichtung kann dabei in andere Geräte integriert werden. Für die vorliegende Erfindung ist lediglich wichtig, dass das Trägermaterial aufgeheizt und kalibriert dem Werkzeug zugeführt wird.

Gemäß einer bevorzugten Ausführungsform der vorliegenden Erfindung ist die Unterform und/oder die Oberform mindestens zweiteilig mit einem ersten Formteil und einem dazu verlagerbaren zweiten Formteil ausgebildet. Die beiden Formteile sind bevorzugt in vertikaler Richtung gegeneinander verschiebbar gelagert. Bevorzugt sind die beiden Formteile federelastisch oder mittels eines Antriebes miteinander gekoppelt, so dass der zweite Formteil mit dem ersten Formteil mitgeführt wird, jedoch in der Bewegung etwas nachhängt. Dadurch erfolgt der Pressvorgang zunächst im Bereich des ersten Formteils. Erst nachdem Trägermaterial und Dekormaterialzuschnitt vom ersten Formteil gegen die Oberform gepresst wurden, und dadurch gegeneinander fixiert sind, wird der Pressvorgang im Bereich des zweiten Formteils abgeschlossen. Dies bietet den Vorteil, dass ein Verschieben von Trägermaterial und Dekormaterialzuschnitt beim Herstellen schwieriger Konturen verhindert wird. Dadurch kann ein nachfolgender Verfahrensschritt zum Beschneiden des Dekormaterials eingespart werden.

Gemäß einer bevorzugten Ausführungsform weist die Heizeinrichtung Pressmittel für die Dickenkalibrierung des Trägermaterials auf. Dadurch kann die Materialstärke an die spezifischen Anforderungen des Produkts bzw. Herstellungsprozesses angepasst werden.

Gemäß einer bevorzugten Ausführungsform kann eine Schneideinrichtung zum Zuschneiden der Außenkontur des Trägermaterials im Werkzeug vorgesehen werden. Dadurch kann während der Formgebung und dem Verbinden von Dekormaterial und Trägermaterial der Außenbeschnitt erfolgen. Ein nachfolgender Verfahrensschritt von einem Zuschneiden wird eingespart und das Verfahren damit schneller und effizienter gestaltet.

### Kurze Beschreibung der Zeichnungen

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine Vorrichtung zum Herstellen flächiger kaschierter Bauteile gemäß einer ersten Ausführungsform mit im Wesentlichen geschlossenem Werkzeug in einer Schnittdarstellung; und

- Fig. 2: eine Vorrichtung zum Herstellen flächiger kaschierter Bauteile gemäß der Ausführungsform aus Fig. 1 mit im Wesentlichen geöffnetem Werkzeug in einer Schnittdarstellung.

In den Figuren bezeichnen dieselben Bezugszeichen gleiche oder funktionsgleiche Komponenten, soweit nichts Gegenteiliges angegeben ist.

Ausführliche Beschreibung der bevorzugten Ausführungsformen

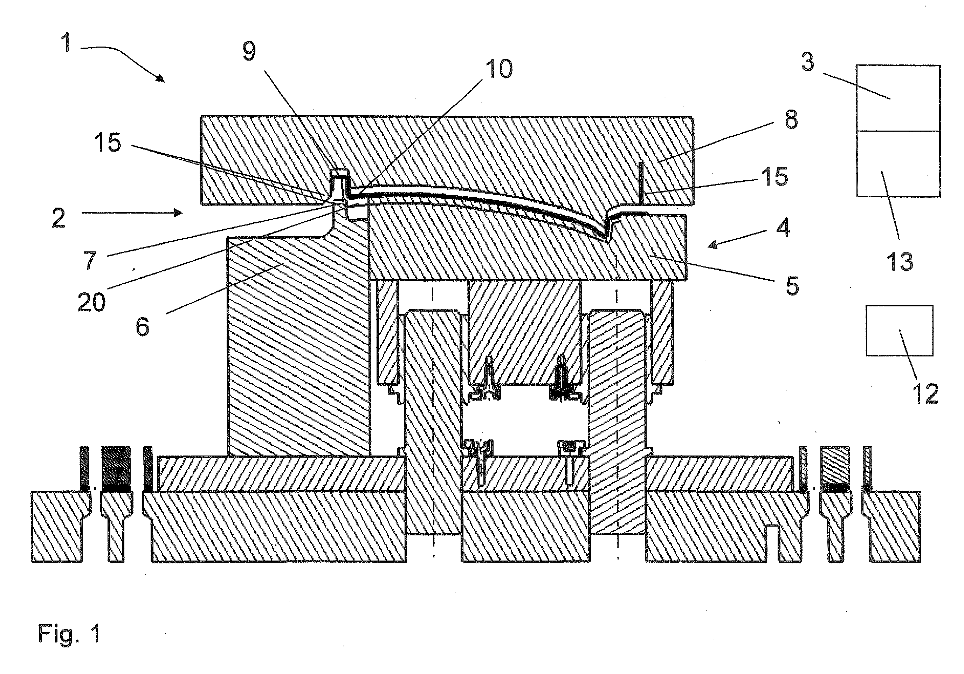

Fig. 1 zeigt eine Vorrichtung 1 zum Herstellen flächiger kaschierter Bauteile gemäß einer ersten Ausführungsform mit im Wesentlichen geschlossenem Werkzeug 2 in einer Schnittdarstellung. Das Werkzeug 2 ist aus zwei Formhälften, d.h. einer Unterform 4 und einer darüber angeordneten Oberform 8 gebildet. Unterform 4 und Oberform 8 können aufeinander zu bewegt werden, um ein dazwischen angeordnetes Bauteil, das hier aus einem Dekormaterialzuschnitt 20 und einem darauf angeordneten Trägermaterial 10 gebildet wird, zusammen zu pressen. Bei diesem Ausführungsbeispiel ist die Unterform 4 zweiteilig aus einem rechts im Bild dargestellten ersten Formteil 5 und einem links daneben dargestellten zweiten Formteil 6 gebildet. Die beiden Formteile 5, 6 sind in vertikaler Richtung gegeneinander verschiebbar gelagert. Bei diesem Ausführungsbeispiel sind die beiden Formteile 5, 6 federelastisch miteinander gekoppelt, so dass der zweite Formteil 6 mit dem ersten Formteil 5 mitgeführt wird, jedoch in der Aufwärtsbewegung etwas nachhängt. Dadurch erfolgt der Pressvorgang zunächst im Bereich des ersten Formteils 5. Erst nachdem Trägermaterial 10 und Dekormaterialzuschnitt 20 vom ersten Formteil 5 gegen die Oberform 8 gepresst wurden und dadurch gegeneinander fixiert sind, wird der Pressvorgang im Bereich des zweiten Formteils 6 abgeschlossen. Dies bietet den Vorteil, dass ein Verschieben von Trägermaterial 10 und Dekormaterialzuschnitt 20 beim Herstellen schwieriger Konturen verhindert wird. Dies wird bei dieser Ausführungsform ferner dadurch verhindert, dass im zweiten Formteil 6 ein Vorsprung 7 vorgesehen ist, der in eine entsprechende Vertiefung 9, die in der gegenüberliegenden Formhälfte, hier die Oberform 8, vorgesehen ist, bei geschlossenem Werkzeug 2 greift. Im Bereich von Vorsprung 7 und Vertiefung 9 werden Trägermaterial 10 und Dekormaterialzuschnitt 20 in Form einer Bucht geklemmt und damit besonders gut fixiert. Eine Schneideinrichtung 15 ist in der Oberform 8 vorgesehen. Mittels der Schneideinrichtung 15 kann das Trägermaterial 10 auf Maß geschnitten werden. Durch das Vorsehen der Schneideinrichtung 15 in der Oberform 8 kann dieser Schneidvorgang direkt im Werkzeug 2 beim oder vor dem Pressen ausgeführt werden. Lediglich schematisch in Form von Rechtecken ist rechts im Bild eine Heizeinrichtung 3 zum Aufheizen des Trägermaterials 10 vorgesehen. Die Heizeinrichtung 3 ist außerhalb des Werkzeugs 2 vorgesehen. Die Heizeinrichtung 3 kann in eine beliebige vorgeschaltete Maschine integriert sein. Es kommt lediglich darauf an, dass das Trägermaterial 10 vorgewärmt dem Werkzeug 2 zugeführt wird. Bei diesem Ausführungsbeispiel weist die Heizeinrichtung 3 zusätzlich ein Pressmittel 13 auf. Das Pressmittel 13 ermöglicht es, durch Pressen die Dicke des Trägermaterials 10 zu verändern und somit eine Dickenkalibrierung durchzuführen. Ferner ist beispielhaft schematisch eine Positioniereinrichtung 12 als Rechteck dargestellt, mittels der eine Positionierung erfolgen kann. Mit der erfindungsgemäßen Vorrichtung 1 ist es möglich, den Dekormaterialfertigzuschnitt 20 auf Trägermaterialien 10 klebstofffrei in einem Arbeitsschritt positionsgenau zu kaschieren. Die Vorrichtung erlaubt den Einsatz eines Dekormaterialzuschnitts 20, der fertig beschnitten ist, so dass der Arbeitsschritt einer formgebenden Nachbearbeitung entfällt.

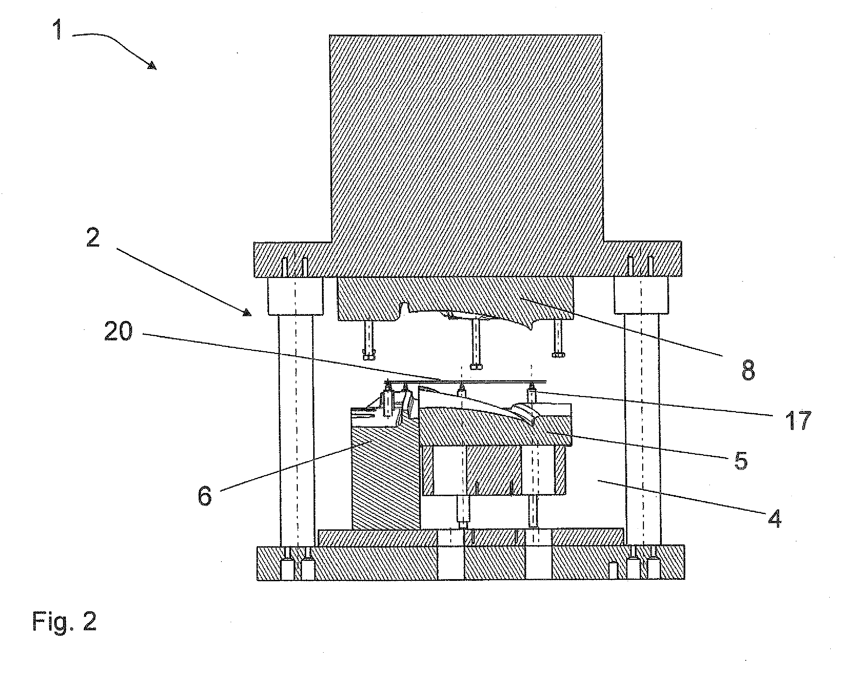

Fig. 2 zeigt eine Vorrichtung 1 zum Herstellen flächiger kaschierter Bauteile gemäß der Ausführungsform aus Fig. 1 mit im Wesentlichen geöffnetem Werkzeug in einer Schnittdarstellung. Neben den schon aus Fig. 1 bekannten Elementen sind an der Unterform 4 Positionierhilfen 17 zu erkennen. Die Positionierhilfen 17 erlauben eine positionsgenaue Ausrichtung des Dekormaterialzuschnitts 20 im Werkzeug 2, indem der Dekormaterialzuschnitt 20 an den Positionierhilfen 17 zum Anliegen gebracht wird. Um ein Schließen des Werkzeugs 2 weiterhin zu ermöglichen, sind die Positionierhilfen 17 bei diesem Ausführungsbeispiel versenkbar angeordnet und werden beim Schließen des Werkzeugs 2 in die Unterform 4 und damit aus dem Kollisionsbereich mit der Oberform 8 abgesenkt. Bei diesem Ausführungsbeispiel erfolgt das Absenken der Positionierhilfen 17 in die Unterform 4 beim Schließen des Werkzeugs 2 durch den Andruck der Oberform 8.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Vorrichtung zum Herstellen flächiger kaschierter Bauteile
- 2: Werkzeug
- 3: Heizeinrichtung
- 4: Unterform
- 5: erstes Formteil
- 6: zweites Formteil
- 7: Vorsprung
- 8: Oberform
- 9: Vertiefung
- 10: Trägermaterial
- 12: Positioniereinrichtung
- 13: Pressmittel
- 15: Schneideinrichtung
- 17: Positionierhilfen
- 20: Dekormaterialzuschnitt

## Patentansprüche

1. Vorrichtung (1) zum Herstellen flächiger kaschierter Bauteile, insbesondere Innenverkleidungsteile für Kraftfahrzeuge, mit:
einem Werkzeug (2) mit einer temperierten Unterform (4) und einer temperierten Oberform (8), von denen mindestens eine in Bezug auf die andere verfahrbar ist,
einer außerhalb des Werkzeugs (2) angeordneten Heizeinrichtung (3) zum Aufheizen und bevorzugt auch Kalibrieren eines flächigen Trägermaterials (10), und
einer Positioniereinrichtung (12) zum Positionieren eines in das Werkzeug (2) einzulegenden Dekormaterialzuschnitts (20); bevorzugt bei automatisierter Zuführung des Dekormaterialzuschnittes.

2. Vorrichtung nach Anspruch 1,
**dadurch gekennzeichnet,**
**dass** die Unterform (4) und/oder die Oberform (8) mindestens zweiteilig mit einem ersten Formteil (5) und einem dazu verlagerbaren zweiten Formteil (6) ausgebildet ist.

3. Vorrichtung nach Anspruch 2,
**dadurch gekennzeichnet,**
**dass** der erste Formteil (5) einen Vorsprung (7) aufweist, der in eine entsprechende Vertiefung (9), die in der gegenüberliegenden Formhälfte (4, 8) vorgesehen ist, bei geschlossenem Werkzeug (2) greift.

4. Vorrichtung nach Anspruch 2 oder 3,
**dadurch gekennzeichnet,**
**dass** der erste Formteil (5) und der zweite Formteil (6) federelastisch oder mit Hilfe eines Antriebs miteinander gekoppelt sind.

5. Vorrichtung nach einem der vorhergehenden Ansprüche,
**dadurch gekennzeichnet,**
**dass** die Heizeinrichtung (3) Pressmittel (13) für die Dickenkalibrierung des Trägermaterials (10) aufweist.

6. Vorrichtung nach einem der vorhergehenden Ansprüche,
**dadurch gekennzeichnet,**
**dass** eine Schneideinrichtung (15) zum Zuschneiden der Außenkontur des Trägermaterials (10) im Werkzeug (2) vorgesehen werden kann.

7. Vorrichtung nach einem der vorhergehenden Ansprüche,
**dadurch gekennzeichnet,**
**dass** versenkbarere Positionierhilfen (17) vorgesehen sind, an die im unversenkten Zustand der Dekormaterialzuschnitt (20) zum Positionieren im Werkzeug (2) anlegbar ist.

8. Verfahren zum Herstellen flächiger kaschierter Bauteile, insbesondere Innenverkleidungsteile für Kraftfahrzeuge, mit den Verfahrenschritten:
(a) Anordnen und Positionieren eines Dekormaterialzuschnitts (20) in einem Werkzeug (2) mit einer Unterform (4) und einer Oberform (8), von denen mindestens eine in Bezug auf die andere verfahrbar ist;
(b) Aufheizen und bevorzugt auch Kalibrieren eines flächigen Trägermaterials (10) außerhalb des Werkzeugs (2);
(c) Anordnen und Positionieren des aufgeheizten Trägermaterials (10) in dem Werkzeug (2) auf dem positionierten Dekormaterial-Fertigzuschnitt; und
(d) Verformen des Trägermaterials (10) und Verbinden von Trägermaterial (10) und Dekormaterialzuschnitt (20) durch ein Zusammenpressen durch ein auf einander zu Bewegen von Unterform (4) und Oberform (8).

9. Verfahren nach Anspruch 8,
**dadurch gekennzeichnet,**
**dass** das Trägermaterial (10) aus einem Naturfaser/Kunststoff Gemisch, insbesondere einem Naturfaser/Polypropylen Gemisch gebildet ist.

10. Verfahren nach einem der Ansprüche 8 bis 9,
**dadurch gekennzeichnet,**
**dass** das Verbinden von Trägermaterial (10) und Dekormaterialzuschnitt (20) kleberlos erfolgt.

11. Verfahren nach einem der Ansprüche 8 bis 10,
**dadurch gekennzeichnet,**
**dass** das Positionieren des Dekormaterialzuschnitts (20) im Werkzeug (2) mittels versenkbarer Positionierhilfen (17) erfolgt.

12. Verfahren nach Anspruch 11,
**dadurch gekennzeichnet,**
**dass** die versenkbaren Positionierhilfen (17) beim Verformen des Trägermaterials, d.h. beim ein auf einander zu Bewegen von Unterform (4) und Oberform (8) versenkt werden.

13. Verfahren nach Anspruch 12,
**dadurch gekennzeichnet,**
**dass** die versenkbaren Positionierhilfen (17) durch einen Andruck der gegenüberliegenden Formhälfte (4, 8) versenkt werden.
